# EUROPEAN PATENT SPECIFICATION

(11) **EP 3 825 094 B1**
(45) Date of publication and mention of the grant of the patent: **06.09.2023**
(21) Application number: 20209037.9
(22) Date of filing: 20.11.2020
(51) Int. Cl.: B29C 48/30, B29C 48/08, B05C 5/02, B29L 31/34, B29C 48/15

(54) **SLOT DIE FOR MANUFACTURING RECHARGEABLE BATTERY ELECTRODE**
SCHLITZDÜSE ZUR HERSTELLUNG EINER ELEKTRODE FÜR EINE WIEDERAUFLADBARE BATTERIE
FILIÈRE PLATE POUR LA FABRICATION D'UNE ÉLECTRODE DE BATTERIE RECHARGEABLE

(30) Priority: 20.11.2019 KR 20190149286
(43) Date of publication of application: 26.05.2021
(73) Proprietor: Samsung SDI Co., Ltd., Yongin-si, Gyeonggi-do 17084 (KR); Korea University Research and Business Foundation, Seoul 02841 (KR)
(72) Inventor: AHN, Won-Gi, 17084 Gyeonggi-do (KR); KIM, Yongho, 17084 Gyeonggi-do (KR); PARK, Jin Seok, 08709 Seoul (KR); BAE, Juhye, 17084 Gyeonggi-do (KR); EOM, Hyeri, 17084 Gyeonggi-do (KR); JEONG, Min-young, 17084 Gyeonggi-do (KR); JUNG, Hyun Wook, 03709 Seoul (KR)
(74) Representative: Walaski, Jan Filip

(56) References cited:
- CN-A- 102 527 576
- CN-A- 106 216 179
- JP-A- 2018 089 599
- KR-A- 20160 074 331
- US-A1- 2006 099 289
- US-A1- 2013 236 651

## Description

### BACKGROUND OF THE INVENTION

### (a) Field of the Invention

The present invention relates to a slot die for manufacturing a rechargeable battery electrode. More particularly, the present invention relates to a slot die for manufacturing a rechargeable battery electrode including a shim member for controlling a discharging rate of an active material slurry coated on a substrate.

### (b) Description of the Related Art

A rechargeable battery repeats charging and discharging, differing from a primary cell. A small rechargeable battery is used for portable small electronic devices such as a mobile phone, a laptop computer, or a camcorder. A large capacity and high density rechargeable battery is used to store motor driving power or energy of hybrid vehicles and electric vehicles.

The rechargeable battery includes an electrode assembly for charging and discharging a current, a case for receiving the electrode assembly and an electrolyte solution, a cap plate combined to an opening of the case, and an electrode end for drawing out the electrode assembly to an outside of the cap plate.

The electrode assembly may be formed by disposing electrodes on respective sides of a separation film that is an electrical insulator, and spirally winding the separation films and the electrodes, stacking them, or mixing them. The separation film allows charging and discharging of the electrode assembly by separating the electrodes with different polarities and maintaining ion conductivity in the electrode assembly.

The electrode is formed by coating an active material slurry on the substrate. A slot die is used when the electrode is manufactured by coating the active material slurry on the substrate. The slot die includes a lower block and an upper block for forming a chamber for supplying the active material slurry and setting a height of a slot for discharging the active material slurry, and a shim member installed therebetween and setting a width of a slot.

In general, regarding the width of the slot set between respective ends of the shim member, when a distribution of discharging rates of the active material slurry becomes non-uniform, a soaring phenomenon of the active material slurry is generated at edges of the respective ends of the substrate in a width direction, and a coating thickness of the active material slurry of the substrate in the width direction becomes non-uniform. In other words, the material slurry becomes higher at the edges relative to the rest of the substrate.

JP 2018089599 A, CN 102527576 A, CN 106216179 A relate to a slot die.

US 2013/236651 A1 relates to a shim member sandwiched between two die blocks.

US 2006/099289 A1 relates to a foam forming die.

KR 20160074331 A relates to a coating slot die.

The above information disclosed in this Background section is only for enhancement of understanding of the background of the invention, and therefore it may contain information that does not form the prior art that is already known to a person of ordinary skill in the art.

### SUMMARY OF THE INVENTION

According to an aspect of the present invention, there is provided a slot die according to claim 1.

The present invention has been made in an effort to provide a slot die for manufacturing a rechargeable battery electrode for providing a uniform coating thickness of an active material layer in terms of a width of a substrate by providing a uniform discharging rate distribution of an active material slurry in terms of a width of a slot.

An exemplary embodiment of the present invention provides a slot die for manufacturing a rechargeable battery electrode, including: a first block; a second block facing the first block; and a shim member positioned between the first block and the second block, wherein the first block and the second block are combined to each other to form a slot for discharging an active material slurry, the first block includes a chamber for receiving the active material slurry and forms a first side in a width direction and a discharging direction of the slot, the second block faces the first side to form a second side in the width direction and the discharging direction of the slot, the shim member includes end portions facing each other at respective ends of the first side and the second side and formed in a height direction of the slot, and the end portion includes a width adjuster protruding to a second reference point from a first reference point of the shim member in the width direction by a first adjusting width (Lw), inclined to a third reference point from the second reference point with a first angle (θ₁) with respect to the discharging direction, and formed in the discharging direction by a first adjusting length (Ls).

A width ratio (Lw/W) of the first adjusting width (Lw) vs. a width (W) of the slot may be greater than 0 and equal to or less than 0.1 (0 < Lw/W ≤ 0.1). The width ratio (Lw/W) of the first adjusting width (Lw) vs. a width (W) of the slot may be equal to or greater than 0.02 and equal to or less than 0.06 (0.02 ≤ Lw/W ≤ 0.06).

A length ratio (Ls/S) of the first adjusting length (Ls) vs. a length (S) of the slot in a discharging direction may be greater than 0 and equal to or less than 0.5 (0 < Ls/S ≤ 0.5).

The first angle θ1 may be greater than 0° and equal to or less than 30° (0° < θ1 ≤ 30°).

The width adjuster may include a width increased portion for gradually increasing a width of the slot from a minimum width of the slot in the discharging direction.

The width adjuster may further include a width reduced portion connected to the width increased portion in the discharging direction and gradually reducing the width of the slot in the discharging direction.

The width adjuster may be formed to be inclined with a second angle θ₂ in an opposite direction to the first angle with respect to the discharging direction to a fourth reference point from the third reference point of the shim member.

The second angle θ2 is greater than 0° and equal to or less than 15° (0° < θ2 ≤ 15°).

The width adjuster may further include a convex round portion further connected to the width reduced portion in the discharging direction, formed to be round at an end of the discharging direction, and increasing a width of the slot in the discharging direction.

The width adjuster may include an additional width increased portion further connected to the width increased portion in the discharging direction and gradually additionally increasing a width of the slot in the discharging direction.

The width adjuster may be formed to be inclined with a third angle θ₃ in a direction of the first angle with respect to the discharging direction to a fifth reference point from the third reference point of the shim member.

The third angle θ₃ is greater than 0° and equal to or less than 25° (0° < θ3 ≤ 25°).

The width adjuster may further include a concave round portion further connected to the additional width increased portion in the discharging direction, formed to be round at the end of the discharging direction, and reducing the width of the slot in the discharging direction.

The width adjuster may be formed in a straight line in the height direction so as to be vertically connected to the first side and the second side.

The width adjuster may be formed to be concave round or convex round toward the slot so as to be connected to the first side and the second side in a round way.

The slot die according to the exemplary embodiments of the present invention provides the uniform discharging rate distribution of the active material slurry to prevent the soaring shape of the active material slurry on the edges of the respective ends of the substrate in the width direction, in terms of the width of the slot set between the respective ends of the shim member. Therefore, the uniform coating thickness of the active material layer is obtained in the width direction of the substrate according to the exemplary embodiment.

According to an aspect of the invention, there is provided a slot die for manufacturing a rechargeable battery electrode, comprising a first block, a second block facing the first block and a shim member positioned between the first block and the second block, the shim member having end portions spaced apart from one another to form a slot for discharging an active material slurry between the end portions and the facing surfaces of the first block and the second block, the first block includes a chamber for receiving the active material slurry, and each of the end portions includes a protrusion that reduces the width of the slot at the end opposite the end at which the active material slurry is discharged, wherein the angle of the protrusion is arranged to provide a substantially uniform discharge rate of the active material slurry across the width of the slot.

### BRIEF DESCRIPTION OF THE DRAWINGS

FIG. 1 shows an exploded perspective view of a slot die for manufacturing a rechargeable battery electrode according to a first exemplary embodiment of the present invention.
FIG. 2 shows a top plan view of a shim member shown in FIG. 1.
FIG. 3 shows a cross-sectional view with respect to a line III-III of FIG. 1.
FIG. 4 shows a top plan view of an end portion on one side of a shim member for setting a width of a slot shown in FIG. 2.
FIG. 5 shows a top plan view of an end portion on one side of a shim member for setting a width of a slot in a slot die for manufacturing a rechargeable battery electrode according to a second exemplary embodiment of the present invention.
FIG. 6 shows a top plan view of an end portion on one side of a shim member for setting a width of a slot in a slot die for manufacturing a rechargeable battery electrode according to a third exemplary embodiment of the present invention.
FIG. 7 shows a top plan view of an end portion on one side of a shim member for setting a width of a slot in a slot die for manufacturing a rechargeable battery electrode according to a fourth exemplary embodiment of the present invention.
FIG. 8 shows a top plan view of an end portion on one side of a shim member for setting a width of a slot in a slot die for manufacturing a rechargeable battery electrode according to a fifth exemplary embodiment of the present invention.
FIG. 9 shows a top plan view of an end portion on one side of a shim member for setting a width of a slot in a slot die for manufacturing a rechargeable battery electrode according to a sixth exemplary embodiment of the present invention.
FIG. 10 shows a top plan view of an end portion on one side of a shim member for setting a width of a slot in a slot die for manufacturing a rechargeable battery electrode according to a seventh exemplary embodiment of the present invention.
FIG. 11 shows a top plan view of an end portion on one side of a shim member for setting a width of a slot in a slot die for manufacturing a rechargeable battery electrode according to an eighth exemplary embodiment of the present invention.
FIG. 12 shows a graph of a coating thickness relationship of an active material slurry with respect to a width of a slot in the case of using one of slot dies according to exemplary embodiments of the present invention and in the case of using a slot die according to a comparative example.
FIG. 13 shows a cross-sectional view of an electrode showing a coating thickness of an active material layer with respect to a width of a substrate in a comparative example of an evaluation example.
FIG. 14 shows a cross-sectional view of an electrode showing a coating thickness of an active material layer with respect to a width of a substrate in a comparative example of an evaluation example.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

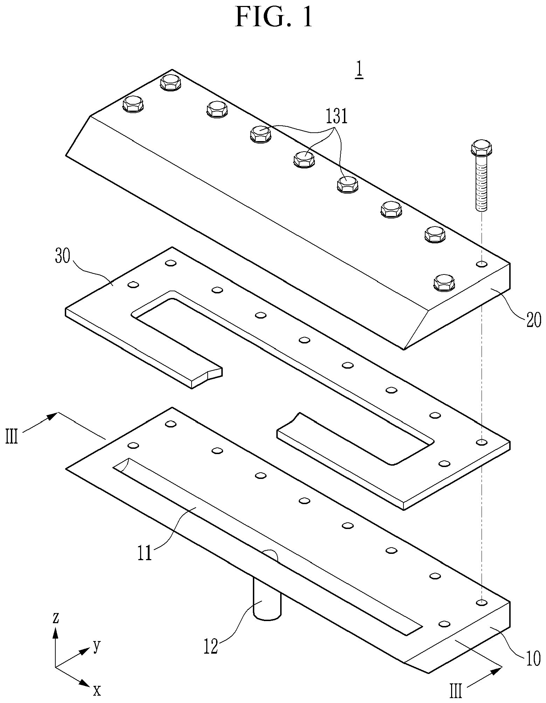

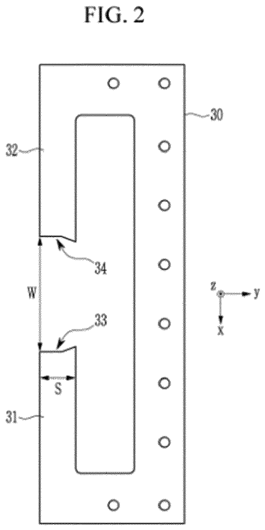

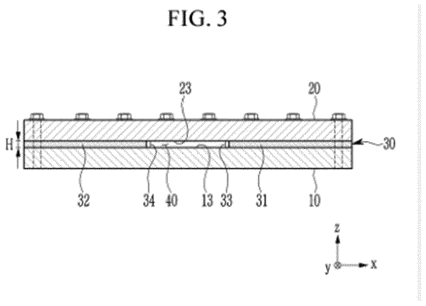

FIG. 1 shows an exploded perspective view of a slot die for manufacturing a rechargeable battery electrode according to a first exemplary embodiment of the present invention, FIG. 2 shows a top plan view of a shim member shown in FIG. 1, and FIG. 3 shows a cross-sectional view with respect to a line III-III of FIG. 1.

Referring to FIG. 1 to FIG. 3, the slot die 1 (a slot die, hereinafter) for manufacturing a rechargeable battery electrode according to a first exemplary embodiment of the present invention includes a first block 10, a second block 20, and a shim member 30 installed therebetween. The first and second blocks 10 and 20 and the shim member 30 may be fastened by a fastening member 131 to form a slot die.

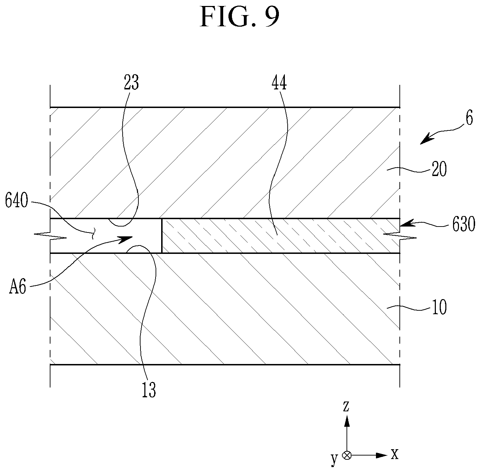

The first block 10 includes a chamber 11 for temporarily storing a supplied active material slurry. A supply unit 12 is connected to a bottom of the first block 10 to supply the active material slurry to the chamber 11. The first and second blocks 10 and 20 combined to each other, in other words fixed together, form a slot 40 for discharging active material slurry. The slot 40 may be formed to be quadrangular in the x- and z-axis directions (refer to FIG. 9), or may be changed to be round in the x-axis direction according to the shape of the shim member 30.

The first block 10 forms a first side 13 of the slot 40 in a width direction (x-axis direction) and a discharging direction (y-axis direction), which can also be seen as the bottom surface of the slot 40. The second block 20 forms a second side 23 of the slot 40 in the width direction (x-axis direction) and the discharging direction (y-axis direction), facing the first side 13, and can also be seen as the top surface of the slot.

The shim member 30 is installed between the first and second blocks 10 and 20, and includes end portions 31 and 32 facing each other at the respective ends of the first side 13 and the second side 23 of the slot 40. These end portions 31, 32 form a third side 33 and a fourth side 34 of the slot 40 facing each other in the height direction (z-axis direction) and the discharging direction (y-axis direction).

Regarding the shim member 30, a thickness in the z-axis direction sets a height (H) of the slot 40, a gap (a distance in the x-axis direction) between the end portions 31, 32 at the discharge side of the slot sets the width (W) of the slot 40, and the width of the third and fourth sides 33 and 34 in the discharging direction (y-axis direction) sets a length (S) of the slot 40.

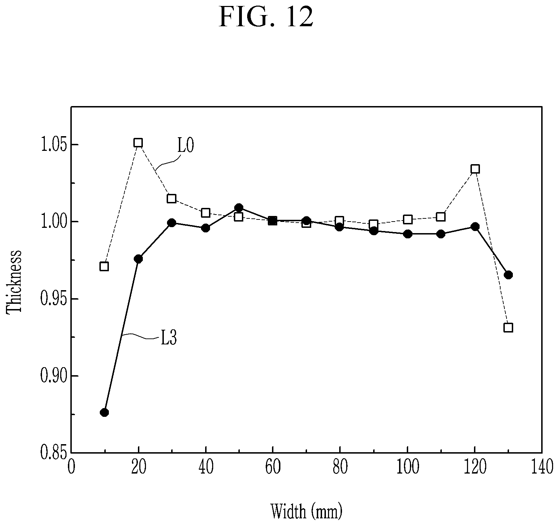

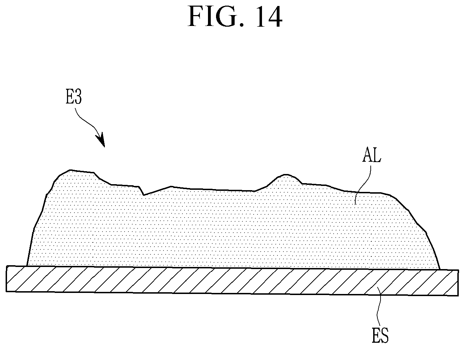

The slot die 1 temporarily stores the active material slurry supplied by the supply unit 12 in the chamber 11 and then discharges it through the slot 40, so the active material slurry is applied to the substrate (ES) proceeding to the front of the slot 40 to form an active material layer (AL) (refer to FIG. 12 and FIG. 14).

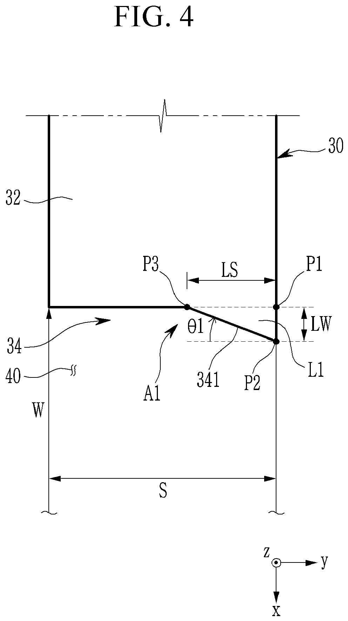

FIG. 4 shows a top plan view of an end portion on one side of a shim member for setting a width of a slot shown in FIG. 2. For ease of description, FIG. 4 will exemplify an end portion 32 on one side. Referring to FIG. 2 to FIG. 4, the end portion 32 includes a width adjuster A1 protruding to a second reference point P2 from a first reference point P1 of the shim member 30 in the width direction (x-axis direction) by a first adjusting width (Lw), inclined to a third reference point P3 from the second reference point P2 with a first angle θ₁ with respect to the discharging direction (y-axis direction), and formed in the discharging direction (y-axis direction) by a first adjusting length (Ls).

Substantially, the width adjuster A1 is positioned on the facing third and fourth sides 33 and 34. The width adjuster A1 includes a width increased portion 341 for gradually increasing the width (W) of the slot 40 from a minimum width of the slot 40 with respect to the discharging direction (y-axis direction).

The width increased portion 341 protrudes to the second reference point P2 from the first reference point P1 of the shim member 30 in the width direction (x-axis direction) by a first adjusting width (Lw), is inclined to the third reference point P3 from the second reference point P2 with the first angle θ₁ with respect to the discharging direction (y-axis direction), and is formed in the discharging direction (y-axis direction) by the first adjusting length (Ls).

A region L1 set with the first adjusting width (Lw) and the first adjusting length (Ls) at the end portion 32 of the shim member 30 increases the discharging rate of the active material slurry in a central portion of the slot 40 in the width direction (x-axis direction), and reduces the discharging rate of the active material slurry on the third and fourth sides 33 and 34 corresponding to the respective sides of the slot 40 in the width direction (x-axis direction). That is, the region L1 of the end portion 32 controls the discharging rate of the active material slurry throughout the width (W) of the slot 40 to be more uniform.

The width increased portion 341 and the region L1 of the end portion 32 will now be described in detail. A width ratio (Lw/W) of the first adjusting width (Lw) vs. width (W) of the slot 40 may be greater than 0 and equal to or less than 0.1 (0 < Lw/W ≤ 0.1). When the width ratio (Lw/W) is within the range (0 < Lw/W ≤ 0.1), the discharging rate of the active material slurry appropriately falls, and the active material slurry may be uniformly coated on the substrate (ES).

Further, the width ratio (Lw/W) of the first adjusting width (Lw) vs. the width (W) of the slot 40 may be equal to or greater than 0.02 and equal to or less than 0.06 (0.02 ≤ Lw/W ≤ 0.06). In this case, the width ratio (Lw/W) may reduce the discharging rate of the active material slurry. Hence, the width increased portion 341 and the region L1 of the end portion 32 may control the discharging rate of the active material slurry throughout the width (W) of the slot 40 to be more uniform.

A length ratio (Ls/S) of the first adjusting length (Ls) vs. the length (S) of the slot 40 in the discharging direction (y-axis direction) may be greater than 0 and equal to or less than 0.5 (0 < Ls/S ≤ 0.5). When the length ratio (Ls/S) is within the range (0 < Ls/S ≤ 0.5), the reduced discharging rate of the active material slurry may be maintained for an appropriate time.

Further, the length ratio (Ls/S) of the first adjusting length (Ls) vs. the length (S) of the slot 40 in the discharging direction (y-axis direction) may be equal to or greater than 0.05 and equal to or less than 0.2 (0.05 ≤ Ls/S ≤ 0.2). In this case, the length ratio (Ls/S) may maintain the reduced discharging rate of the active material slurry for a predetermined time. Therefore, the width increased portion 341 and the region L1 of the end portion 32 may control the discharging rate of the active material slurry throughout the width (W) of the slot 40 to be more uniform.

The first angle θ₁ given when an inclined side for connecting the second reference point P2 and the third reference point P3 is set for the discharging direction (y-axis direction) may be greater than 0° and equal to or less than 30° (0° < θ1 ≤ 30°). When the first angle θ₁ is within the range (0° < θ1 ≤ 30°), the discharging rate of the active material slurry is appropriately reduced, and the active material slurry may be uniformly coated on the substrate (ES).

Further, the first angle θ1 may be equal to or greater than 5° and equal to or less than 25° (5° ≤ θ1 ≤ 25°). In this case, the first angle θ₁ may appropriately reduce the discharging rate of the active material slurry. Therefore, the width increased portion 341 and the region L1 of the end portion 32 may control the discharging rate of the active material slurry throughout the width (W) of the slot 40 to be more uniform.

In another way, when the active material slurry has lower viscosity than required, an edge spreading phenomenon increases, and an edge sinking phenomenon increases because of an increase of the discharging rate from the respective sides of the slot 40 in the width direction (x-axis direction).

When the active material slurry has higher viscosity than required, an edge soaring phenomenon is generated, where the material height increases at the edges relative to the height away from the edges. That is, the edge soaring phenomenon may be generated because of reinforcement of surface tension of the active material slurry caused by a reduction of the discharging rate of the active material slurry on the respective sides of the slot 40 in the width direction (x-axis direction).

Therefore, the active material slurry has viscosity corresponding to a type of the configured material, and the discharging rate on the width direction of the slot 40 may become uniform within the required viscosity range.

Various exemplary embodiments of the present invention will now be described. The first exemplary embodiment and the above-described exemplary embodiments will be compared, the same configurations will be omitted, and different configurations will be described.

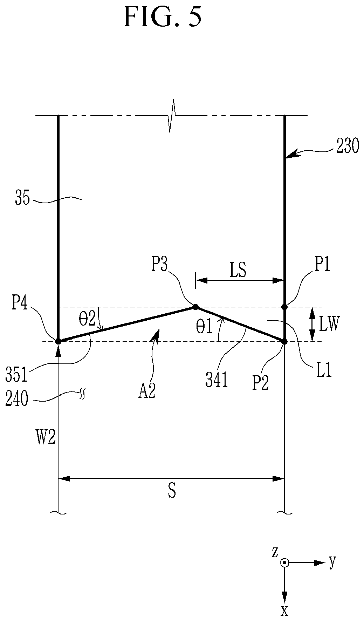

FIG. 5 shows a top plan view of an end portion on one side of a shim member for setting a width of a slot in a slot die for manufacturing a rechargeable battery electrode according to a second exemplary embodiment of the present invention. Referring to FIG. 5, an end portion 35 of the shim member 230 includes a width adjuster A2 on a slot die according to a second exemplary embodiment. The width adjuster A2 further includes a width reduced portion 351 in the width increased portion 341 of the shim member 30 according to the first exemplary embodiment. The width reduced portion 351 is connected to the width increased portion 341 in the discharging direction (y-axis direction), and gradually reduces the width W2 of the slot 240 in the discharging direction.

The width reduced portion 351 is formed to have the length (S-Ls) obtained by subtracting the first adjusting length (Ls) from the length (S) in the discharging direction (y-axis direction) in an inclined way with a second angle θ₂ in an opposite direction to the first angle θ₁ with respect to the discharging direction (y-axis direction) to the fourth reference point P4 from the third reference point P3 that is an end point of the width increased portion 341 in the shim member 230.

The end portion 35 of the shim member 230 further controls the discharging rate of the active material slurry to the width reduced portion 351 in addition to the operation of the shim member 30 and the region L1 according to the first exemplary embodiment.

The second angle θ₂ for an inclined side connecting the third reference point P3 and the fourth reference point P4 to be set with respect to the discharging direction (y-axis direction) may be greater than 0° and equal to or less than 15° (0° < θ2 ≤ 15°). When the second angle θ2 is within the range (0° < θ2 ≤ 15°), the reduced discharging rate of the active material slurry appropriately increases, so the active material slurry may be uniformly coated on the substrate (ES).

Further, the second angle θ2 may be equal to or greater than 5° and equal to or less than 10° (5° ≤ θ2 ≤ 10°). In this case, the second angle θ₂ may appropriately increase the reduced discharging rate of the active material slurry. Hence, the width reduced portion 351 of the end portion 35 may control the discharging rate of the active material slurry throughout the width W2 of the slot 240 to be more uniform.

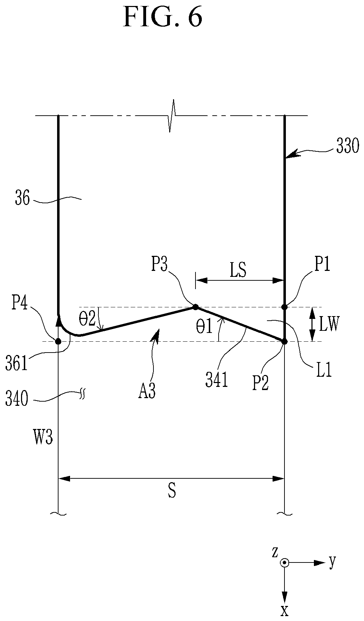

FIG. 6 shows a top plan view of an end portion on one side of a shim member for setting a width of a slot in a slot die for manufacturing a rechargeable battery electrode according to a third exemplary embodiment of the present invention. Referring to FIG. 6, regarding the slot die according to a third exemplary embodiment, the end portion 36 of the shim member 330 includes a width adjuster A3. The width adjuster A3 further includes a convex round portion 361 at the end of the width reduced portion 351 of the shim member 230 according to the second exemplary embodiment.

The convex round portion 361 of the end portion 36 is made round at the end of the discharging direction to increase the width W3 of the slot 340 in the discharging direction. In this case, the convex round portion 361 of the width reduced portion 351 may appropriately reduce the increased discharging rate of the active material slurry. Hence, the convex round portion 361 of the width reduced portion 351 may control the discharging rate of the active material slurry throughout the width W3 of the slot 340 to be more uniform at the end portion 36.

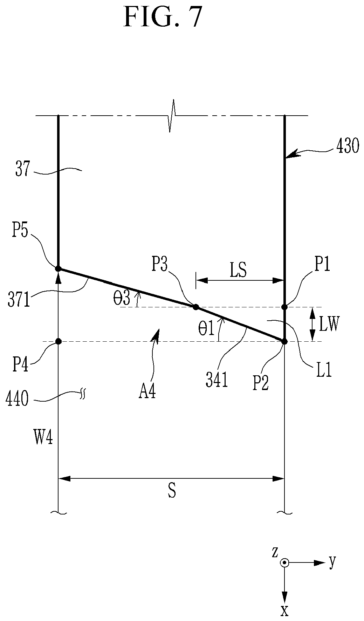

FIG. 7 shows a top plan view of an end portion on one side of a shim member for setting a width of a slot in a slot die for manufacturing a rechargeable battery electrode according to a fourth exemplary embodiment of the present invention. Referring to FIG. 7, regarding the slot die according to the fourth exemplary embodiment, the end portion 37 of the shim member 330 includes a width adjuster A4. The width adjuster A4 further includes an additional width increased portion 371 in the width increased portion 341 according to the first exemplary embodiment shim member 30. The additional width increased portion 371 is connected to the width increased portion 341 in the discharging direction (y-axis direction), and gradually additionally increases the width W4 of the slot 440 in the discharging direction (y-axis direction).

The additional width increased portion 371 is formed to have the length (S-Ls) obtained by subtracting the first adjusting length (Ls) from the length (S) in the discharging direction (y-axis direction) in an inclined way with the third angle θ3 in a direction of the first angle θ1 with respect to the discharging direction to the fifth reference point P5 from the third reference point P3 that is the end point of the width increased portion 341 of the shim member 430.

The end portion 37 of the shim member 430 further controls the discharging rate of the active material slurry with the additional width increased portion 371 in addition to the operation of the region L1 of the shim member 30 according to the first exemplary embodiment.

The third angle θ3 for the inclined side connecting the third reference point P3 and the fifth reference point P5 to be set with respect to the discharging direction (y-axis direction) may be greater than 0° and equal to or less than 25° (0° < θ3 ≤ 25°). When the third angle θ3 is within the range (0° < θ3 ≤ 25°), the reduced discharging rate of the active material slurry is additionally appropriately reduced, so the active material slurry may be uniformly coated on the substrate (ES).

Further, the third angle θ3 may be equal to or greater than 5° and equal to or less than 20° (5° ≤ θ3 ≤ 20°). In this case, the third angle θ₃ may additionally appropriately reduce the reduced discharging rate of the active material slurry. Hence, the additional width increased portion 371 of the end portion 37 may control the discharging rate of the active material slurry throughout the width W4 of the slot 440 to be more uniform.

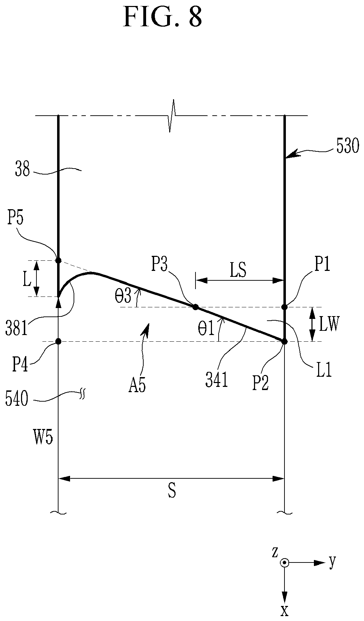

FIG. 8 shows a top plan view of an end portion on one side of a shim member for setting a width of a slot in a slot die for manufacturing a rechargeable battery electrode according to a fifth exemplary embodiment of the present invention. Referring to FIG. 8, regarding the slot die according to a fifth exemplary embodiment, the end portion 38 of the shim member 530 includes a width adjuster A5. The width adjuster A5 further includes a concave round portion 381 at the end of the additional width increased portion of the shim member 430 according to the fourth exemplary embodiment.

The concave round portion 381 of the end portion 38 is formed to be round at the end of the discharging direction to reduce the width W5 of the slot 540 in the discharging direction. In this case, the concave round portion 381 of the additional width increased portion may appropriately increase the reduced discharging rate of the active material slurry. Hence, the concave round portion 381 of the additional width increased portion may control the discharging rate of the active material slurry throughout the width W5 of the slot 540 to be more uniform at the end portion 38.

FIG. 9 shows a top plan view of an end portion on one side of a shim member for setting a width of a slot in a slot die for manufacturing a rechargeable battery electrode according to a sixth exemplary embodiment of the present invention. Referring to FIG. 9, regarding the slot die 6 according to a sixth exemplary embodiment, the width adjuster A6 installed in the end portion 44 of the shim member 630 is formed in a straight line toward the slot 640 in the height direction (z-axis direction) so as to be vertically connected to the first side 13 and the second side 23. The width adjuster A6 that forms a straight line controls the rate-controlled active material slurry to be uniform in the height direction of the slot 640.

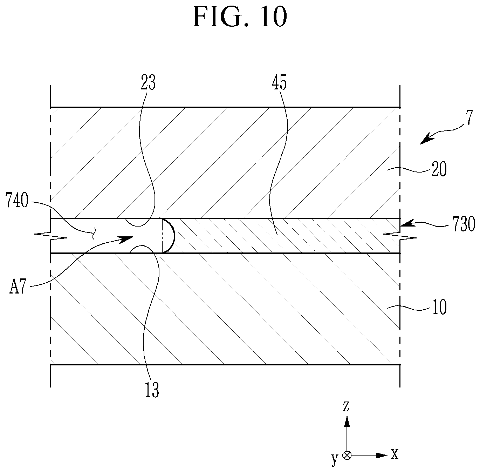

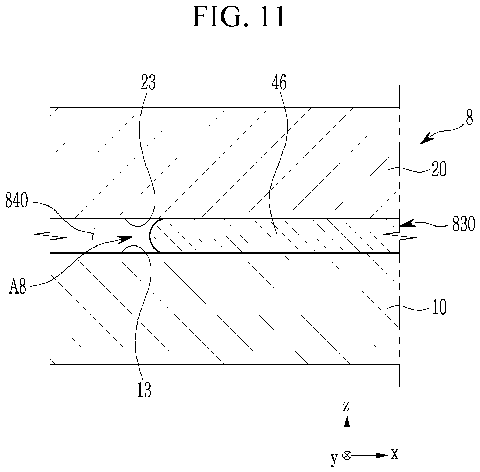

FIG. 10 shows a top plan view of an end portion on one side of a shim member for setting a width of a slot in a slot die for manufacturing a rechargeable battery electrode according to a seventh exemplary embodiment of the present invention, and FIG. 11 shows a top plan view of an end portion on one side of a shim member for setting a width of a slot in a slot die for manufacturing a rechargeable battery electrode according to an eighth exemplary embodiment of the present invention.

Referring to FIG. 10 and FIG. 11, regarding the slot dies 7 and 8 according to the seventh and eighth exemplary embodiments, the width adjusters A7 and A8 installed in the end portions 45 and 46 of the shim members 730 and 830 are respectively formed to be concave round and convex round toward the slots 740 and 840 so as to be connected to the first side 13 and the second side 23 in a round way.

The concave round width adjuster A7 adjusts the rate-adjusted active material slurry to be a minimum in a center of the slot 740 in the height direction (z-axis direction) and to be a maximum at the respective ends thereof. The convex round width adjuster A8 adjusts the rate-adjusted active material slurry to be a maximum in the center of the slot 840 in the height direction (z-axis direction) and to be a minimum at the respective ends thereof.

The shim members 630, 730, and 830 of the slot dies 6, 7, and 8 according to sixth, seventh, and eighth exemplary embodiments may be selectively applied to the shim members 30, 230, 330, 430, and 530 of the slot dies according to first to fifth exemplary embodiments to more uniformly control the discharging rate of the active material slurry throughout the widths W, W2, W3, W4, and W5 of the slots 40, 240, 340, 440, and 540.

An evaluation example of the coating thicknesses of the active material slurries AL0 and AL on the substrates ESo and ES will now be described with reference to FIG. 12 to FIG. 14.

FIG. 12 shows a graph of a coating thickness relationship of the active material slurry with respect to a width of the slot in the case of using one of slot dies according to exemplary embodiments of the present invention and in the case of using a slot die according to a comparative example. The respective ends of the shim member are formed to have a maximum width inside in the discharging direction (y-axis direction) and are formed to become gradually narrower in its width as it approaches an outside, regarding a slot die (not shown) according to a comparative example.

For example, referring to FIG. 5, the slot die according to a comparative example may form a width reduced portion from the first reference point P1 throughout the length (S) of the discharging direction (y-axis direction). The width reduced portion may be formed to be inclined by the size of the first angle θ1 in the opposite direction to the first angle θ1.

FIG. 12 shows a graph for comparing a thickness relationship of the active material slurry with respect to a width W3 of the slot 340, regarding a slot die to which a shim member according to a comparative example is applied and a slot die to which a shim member 330 according to an exemplary embodiment (e.g., a third exemplary embodiment) is applied.

A relational line Lo according to a comparative example has an edge soaring shape for providing the maximum thickness of the active material slurry at the respective ends of the slot in the width direction. Compared to this, the relational line L3 according to an exemplary embodiment provides a generally uniform thickness of the active material slurry of the slot 340 in the width W3 direction.

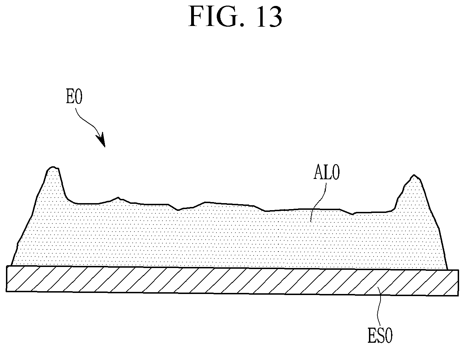

FIG. 13 shows a cross-sectional view of an electrode showing a coating thickness of an active material layer with respect to a width of the substrate in a comparative example of an evaluation example, and FIG. 14 shows a cross-sectional view of an electrode showing a coating thickness of an active material layer with respect to a width of the substrate in a comparative example of an evaluation example.

Referring to FIG. 13 and FIG. 14, the electrode E0 according to a comparative example has a big edge soaring shape of the active material layer AL0 at the respective ends of the substrate ESo according to the relational line Lo. Compared to this, the electrode E3 according to an exemplary embodiment may form an active material layer (AL) with a generally uniform thickness in the width direction of the substrate (ES) according to the relational line L3.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**<Description of symbols>**

| | | | |
|---|---|---|---|
| 1, 6, 7, 8: | slot die | 10: | first block |
| 11: | chamber | 12: | supply unit |
| 13, 23: | first, second side | 20: | second block |
| 30, 230, 330, 430, 530, 630, 730, 830: | shim member | | |
| 33: | third side | 34: | fourth side |
| 31, 32, 35, 36, 37, 38, 44, 45, 46: | end portion | | |
| 40, | 240, 340, 440, 540, 640, 740, 840: | slot | |
| 131: | fastening member | 341: | width increased portion |
| 351: | width reduced portion | 361: | convex round portion |
| 371: | additional width increased portion | 381: | concave round portion |
| A1, A2, A3, A4: | width adjuster | A5, A6, A7, A8: | width adjuster |
| AL, ALo: | active material layer | Eo, E3: | electrode |
| ES, ESo: | substrate | H: | height |
| Lo: | relational line | L1: | region |
| L3: | relational line | Ls: | first adjusting length |
| Ls/S: | length ratio | Lw: | first adjusting width |
| Lw/W: | width ratio | P1: | first reference point |
| P2: | second reference point | P3: | third reference point |
| P4: | fourth reference point | P5: | fifth reference point |
| S: | length | W, W2, W3, W4, W5: | width |
| θ₁: | first angle | θ₂: | second angle |
| θ₃: | third angle | | |

## Claims

1. A slot die (1, 6, 7, 8) for manufacturing a rechargeable battery electrode, comprising:
a first block (10);
a second block (20) facing the first block; and
a shim member (30, 230, 330, 430, 530, 630, 730, 830) positioned between the first block and the second block, the shim member having end portions (31, 32, 35, 36, 37, 38, 44, 45, 46) spaced apart from one another to form a slot (40, 240, 340, 440, 540, 640, 740, 840) between the end portions and the facing surfaces of the first block and the second block for discharging an active material slurry at a discharge side of the slot,
the first block includes a chamber (11) for receiving the active material slurry,
the slot die being **characterized in that**
each of the end portions includes a width adjuster, A1, protruding to a second reference point, P2, from a first reference point, P1, of the shim member in the width direction by a first adjusting width (Lw), inclined to a third reference point, P3, from the second reference point with a first angle (θ₁) with respect to the discharging direction, and formed in the discharging direction by a first adjusting length (Ls),
wherein the first and second reference points are on a first line parallel to the width direction and the first reference point and the third reference point are on a second line parallel to the discharging direction,
wherein the first line is on sides of the end portions, the sides being the farthest from the discharge side of the slot,
wherein a distance between the respective second reference points of the end portions is a width of the slot along the first line, and
wherein the first angle is such that the slot gradually widens in the discharging direction from the second reference points to the third reference points.

2. The slot die of claim 1, wherein
a width ratio (Lw/W) of the first adjusting width (Lw) vs. a width (W) of the slot is greater than 0 and equal to or less than 0.1 (0 < Lw/W ≤ 0.1), optionally wherein
the width ratio (Lw/W) of the first adjusting width (Lw) vs. a width (W) of the slot is equal to or greater than 0.02 and equal to or less than 0.06 (0.02 ≤ Lw/W ≤ 0.06).

3. The slot die of claim 1, wherein
a length ratio (Ls/S) of the first adjusting length (Ls) vs. a length (S) of the slot in a discharging direction is greater than 0 and equal to or less than 0.5 (0 < Ls/S ≤ 0.5).

4. The slot die of claim 1, wherein
the first angle θ1 is greater than 0° and equal to or less than 30° (0° < θ1 ≤ 30°).

5. The slot die of claim 1, wherein
the width adjuster includes a width increased portion (341) for gradually increasing a width of the slot from a minimum width of the slot in the discharging direction.

6. The slot die of claim 5, wherein
the width adjuster further includes a width reduced portion (351) connected to the width increased portion in the discharging direction and gradually reducing the width of the slot in the discharging direction.

7. The slot die of claim 6, wherein
the width adjuster further includes a convex round portion (361) further connected to the width reduced portion in the discharging direction, formed to be round at an end of the discharging direction, and increasing a width of the slot in the discharging direction.

8. The slot die of claim 5, wherein
the width adjuster includes an additional width increased portion (371) further connected to the width increased portion in the discharging direction and gradually additionally increasing a width of the slot in the discharging direction.

9. The slot die of claim 8, wherein
the width adjuster further includes a concave round portion further connected to the additional width increased portion in the discharging direction, formed to be round at the end of the discharging direction, and reducing the width of the slot in the discharging direction.

10. The slot die of claim 1, wherein
the width adjuster is further formed to be inclined with a second angle θ2 in an opposite direction to the first angle with respect to the discharging direction to a fourth reference point, P4, from the third reference point of the shim member.

11. The slot die of claim 10, wherein
the second angle θ2 is greater than 0° and equal to or less than 15° (0° < θ2 ≤ 15°).

12. The slot die of claim 10, wherein
the width adjuster is formed to be inclined with a third angle θ3 in a direction of the first angle with respect to the discharging direction to a fifth reference point, P5, from the third reference point of the shim member.

13. The slot die of claim 12, wherein
the third angle θ3 is greater than 0° and equal to or less than 25° (0° < θ3 ≤ 25°).

14. The slot die of claim 1, wherein
the width adjuster is formed in a straight line in the height direction of the slot so as to be vertically connected to the first side and the second side.

15. The slot die of claim 1, wherein
the width adjuster is formed to be concave round or convex round toward the slot so as to be connected to the first side and the second side in a round way.

## Patentansprüche

1. Schlitzdüse (1, 6, 7, 8) zur Herstellung einer Elektrode für eine wiederaufladbare Batterie, umfassend:
einen ersten Block (10);
einen zweiten Block (20), der dem ersten Block gegenüberliegt; und
ein Abstandhalterelement (30, 230, 330,430, 530, 630, 730, 830), das zwischen dem ersten Block und dem zweiten Block angeordnet ist, wobei das Abstandhalterelement Endabschnitte (31, 32, 35, 36, 37, 38, 44, 45, 46) aufweist, die voneinander beabstandet sind, um einen Schlitz (40, 240, 340, 440, 540, 640, 740, 840) zwischen den Endabschnitten und den einander zugewandten Oberflächen des ersten Blocks und des zweiten Blocks zu bilden, um einen Aktivmaterialschlamm an einer Abgabeseite des Schlitzes auszulassen,
der erste Block eine Kammer (11) zur Aufnahme des Aktivmaterialschlamms aufweist,
wobei die Schlitzdüse **dadurch gekennzeichnet ist, dass**
jeder der Endabschnitte einen Breiteneinsteller A1 aufweist, der zu einem zweiten Bezugspunkt P2 von einem ersten Bezugspunkt P1 des Abstandhalterelements in der Breitenrichtung um eine erste Einstellbreite (Lw) vorsteht, zu einem dritten Bezugspunkt P3 von dem zweiten Bezugspunkt mit einem ersten Winkel (θ1) in Bezug auf die Abgaberichtung geneigt ist und in der Abgaberichtung um eine erste Einstelllänge (Ls) gebildet ist,
wobei der erste und der zweite Bezugspunkt auf einer ersten Linie parallel zur Breitenrichtung liegen und der erste Bezugspunkt und der dritte Bezugspunkt auf einer zweiten Linie parallel zur Abgaberichtung liegen,
wobei sich die erste Linie an den Seiten der Endabschnitte befindet, wobei die Seiten am weitesten von der Abgabeseite des Schlitzes entfernt sind,
wobei ein Abstand zwischen den jeweiligen zweiten Bezugspunkten der Endabschnitte eine Breite des Schlitzes entlang der ersten Linie ist, und
wobei der erste Winkel so beschaffen ist, dass sich der Schlitz in der Abgaberichtung von den zweiten Bezugspunkten zu den dritten Bezugspunkten allmählich verbreitert.

2. Schlitzdüse nach Anspruch 1, wobei
ein Breitenverhältnis (Lw/W) der ersten Einstellbreite (Lw) zu einer Breite (W) des Schlitzes größer als 0 und gleich oder kleiner als 0,1 (0 < Lw/W ≤ 0,1) ist, wobei wahlweise
das Breitenverhältnis (Lw/W) der ersten Einstellbreite (Lw) zu einer Breite (W) des Schlitzes gleich oder größer als 0,02 und gleich oder kleiner als 0,06 ist (0,02 ≤ Lw/W ≤ 0,06).

3. Schlitzdüse nach Anspruch 1, wobei
ein Längenverhältnis (Ls/S) der ersten Einstelllänge (Ls) gegenüber einer Länge (S) des Schlitzes in einer Abgaberichtung größer als 0 und gleich oder kleiner als 0,5 ist (0 < Ls/S ≤ 0,5).

4. Schlitzdüse nach Anspruch 1, wobei
der erste Winkel θ1 größer als 0° und gleich oder kleiner als 30° (0° < θ1 ≤ 30°) ist.

5. Schlitzdüse nach Anspruch 1, wobei
der Breiteneinsteller einen Abschnitt (341) mit vergrößerter Breite zum allmählichen Vergrößern einer Breite des Schlitzes ausgehend von einer Mindestbreite des Schlitzes in der Abgaberichtung aufweist.

6. Schlitzdüse nach Anspruch 5, wobei
der Breiteneinsteller ferner einen Abschnitt (351) mit verringerter Breite aufweist, der mit dem Abschnitt mit vergrößerter Breite in der Abgaberichtung verbunden ist und die Breite des Schlitzes in der Abgaberichtung allmählich verringert.

7. Schlitzdüse nach Anspruch 6, wobei
der Breiteneinsteller ferner einen konvexen runden Abschnitt (361) aufweist, der ferner mit dem Abschnitt mit verringerter Breite in der Abgaberichtung verbunden ist, der so ausgebildet ist, dass er an einem Ende der Abgaberichtung rund ist, und der eine Breite des Schlitzes in der Abgaberichtung erhöht.

8. Schlitzdüse nach Anspruch 5, wobei
der Breiteneinsteller einen zusätzlichen Abschnitt (371) mit vergrößerter Breite aufweist, der ferner mit dem Abschnitt mit vergrößerter Breite in der Abgaberichtung verbunden ist und eine Breite des Schlitzes in der Abgaberichtung schrittweise zusätzlich vergrößert.

9. Schlitzdüse nach Anspruch 8, wobei
der Breiteneinsteller ferner einen konkaven, runden Abschnitt aufweist, der mit dem zusätzlichen Abschnitt mit vergrößerter Breite in der Abgaberichtung verbunden ist, am Ende der Abgaberichtung rund ausgebildet ist und die Breite des Schlitzes in der Abgaberichtung verringert.

10. Schlitzdüse nach Anspruch 1, wobei
der Breiteneinsteller ferner so ausgebildet ist, dass er mit einem zweiten Winkel θ2 in einer zum ersten Winkel entgegengesetzten Richtung in Bezug auf die Abgaberichtung zu einem vierten Bezugspunkt P4 vom dritten Bezugspunkt des Abstandhalterelements geneigt ist.

11. Schlitzdüse nach Anspruch 10, wobei
der zweite Winkel θ2 größer als 0° und gleich oder kleiner als 15° (0° < θ2 ≤ 15°) ist.

12. Schlitzdüse nach Anspruch 10, wobei
der Breiteneinsteller so ausgebildet ist, dass er mit einem dritten Winkel θ3 in einer Richtung des ersten Winkels in Bezug auf die Abgaberichtung zu einem fünften Bezugspunkt, P5, vom dritten Bezugspunkt des Abstandhalterelements geneigt ist.

13. Schlitzdüse nach Anspruch 12, wobei
der dritte Winkel θ3 größer als 0° und gleich oder kleiner als 25° (0° < θ3 ≤ 25°) ist.

14. Schlitzdüse nach Anspruch 1, wobei
der Breiteneinsteller in einer geraden Linie in der Höhenrichtung des Schlitzes so ausgebildet ist, dass er vertikal mit der ersten Seite und der zweiten Seite verbunden ist.

15. Schlitzdüse nach Anspruch 1, wobei
der Breiteneinsteller zum Schlitz hin konkav rund oder konvex rund ausgebildet ist, so dass er mit der ersten Seite und der zweiten Seite rund verbunden ist.

## Revendications

1. Filière plate (1, 6, 7, 8) pour la fabrication d'une électrode de batterie rechargeable, comprenant :
un premier bloc (10) ;
un second bloc (20) faisant face au premier bloc ; et
un élément de cale (30, 230, 330, 430, 530, 630, 730, 830) positionné entre le premier bloc et le second bloc, l'élément de cale étant pourvu de parties d'extrémité (31, 32, 35, 36, 37, 38, 44, 45, 46) espacées les unes des autres de manière à former une fente (40, 240, 340, 440, 540, 640, 740, 840) entre les parties d'extrémité et les surfaces en vis-à-vis du premier bloc et du second bloc afin d'évacuer une bouillie de matériau actif au niveau d'un côté d'évacuation de la fente,
le premier bloc inclut une chambre (11) pour recevoir la bouillie de matériau actif,
la filière plate étant **caractérisée en ce que**
chacune des parties d'extrémité inclut un dispositif de réglage de la largeur, A1, faisant saillie jusqu'à un deuxième point de référence, P2, à partir d'un premier point de référence, P1, de l'élément de cale dans le sens de la largeur suivant une première largeur de réglage (Lw), incliné vers un troisième point de référence, P3, à partir du deuxième point de référence avec un premier angle (θ1) par rapport à la direction d'évacuation, et formé dans la direction d'évacuation par une première longueur de réglage (Ls),
dans laquelle les premier et deuxième points de référence se trouvent sur une première ligne parallèle au sens de la largeur et le premier point de référence ainsi que le troisième point de référence se trouvent sur une seconde ligne parallèle à la direction d'évacuation,
dans laquelle la première ligne se trouve sur les côtés des parties d'extrémité, les côtés étant les plus éloignés du côté d'évacuation de la fente,
dans laquelle une distance entre les deuxièmes points de référence respectifs des parties d'extrémité est une largeur de la fente le long de la première ligne, et
dans laquelle le premier angle est tel que la fente s'élargit graduellement dans la direction d'évacuation à partir des deuxièmes points de référence jusqu'aux troisièmes points de référence.

2. Filière plate selon la revendication 1, dans laquelle
un rapport de largeur (Lw/W) de la première largeur de réglage (Lw) par rapport à une largeur (W)de la fente est supérieur à 0 et inférieur ou égal à 0,1 (0 < Lw/W ≤ 0,1), éventuellement dans laquelle
le rapport de largeur (Lw/W) de la première largeur de réglage (Lw) par rapport à une largeur (W)de la fente est supérieur ou égal à 0,02 et inférieur ou égal à 0,06 (0,02 ≤ Lw/W ≤ 0,06).

3. Filière plate selon la revendication 1, dans laquelle
un rapport de longueur (Ls/S) de la première longueur de réglage (Ls) par rapport à une longueur (S) de la fente dans une direction d'évacuation est supérieur à 0 et inférieur ou égal à 0,5 (0 < Ls/S ≤ 0,5).

4. Filière plate selon la revendication 1, dans laquelle
le premier angle θ1 est supérieur à 0° et inférieur ou égal à 30° (0° < θ1 ≤ 30°).

5. Filière plate selon la revendication 1, dans laquelle
le dispositif de réglage de la largeur inclut une partie augmentée en largeur (341) pour augmenter graduellement une largeur de la fente à partir d'une largeur minimale de la fente dans la direction d'évacuation.

6. Filière plate selon la revendication 5, dans laquelle
le dispositif de réglage de la largeur inclut en outre une partie réduite en largeur (351) raccordée à la partie augmentée en largeur dans la direction d'évacuation et réduisant graduellement la largeur de la fente dans la direction d'évacuation.

7. Filière plate selon la revendication 6, dans laquelle
le dispositif de réglage de la largeur inclut en outre une partie arrondie convexe (361) raccordée en outre à la partie réduite en largeur dans la direction d'évacuation, formée de manière à être arrondie au niveau d'une extrémité de la direction d'évacuation, et augmentant une largeur de la fente dans la direction d'évacuation.

8. Filière plate selon la revendication 5, dans laquelle
le dispositif de réglage de la largeur inclut une partie augmentée en largeur (371) supplémentaire raccordée en outre à la partie augmentée en largeur dans la direction d'évacuation et augmentant graduellement de façon supplémentaire une largeur de la fente dans la direction d'évacuation.

9. Filière plate selon la revendication 8, dans laquelle
le dispositif de réglage de la largeur inclut en outre une partie arrondie concave raccordée en outre à la partie augmentée en largeur supplémentaire dans la direction d'évacuation, formée de manière à être arrondie au niveau d'une extrémité de la direction d'évacuation, et réduisant la largeur de la fente dans la direction d'évacuation.

10. Filière plate selon la revendication 1, dans laquelle
le dispositif de réglage de la largeur est en outre formé pour être incliné avec un deuxième angle θ2 dans une direction opposée au premier angle par rapport à la direction d'évacuation d'un quatrième point de référence, P4, à partir du troisième point de référence de l'élément de cale.

11. Filière plate selon la revendication 10, dans laquelle
le deuxième angle θ2 est supérieur à 0° et inférieur ou égal à 15° (0° < θ2 ≤ 15°).

12. Filière plate selon la revendication 10, dans laquelle
le dispositif de réglage de la largeur est formé pour être incliné avec un troisième angle θ3 dans une direction du premier angle par rapport à la direction d'évacuation vers un cinquième point de référence, P5, à partir du troisième point de référence de l'élément de cale.

13. Filière plate selon la revendication 12, dans laquelle
le troisième angle θ3 est supérieur à 0° et inférieur ou égal à 25° (0° < θ3 ≤ 25°).

14. Filière plate selon la revendication 1, dans laquelle
le dispositif de réglage de la largeur est formé en une ligne droite dans le sens de la hauteur de la fente de manière à être verticalement raccordé au premier côté et au second côté.

15. Filière plate selon la revendication 1, dans laquelle
le dispositif de réglage de la largeur est formé de manière à être arrondi concave ou arrondi convexe en direction de la fente de manière à être raccordé au premier côté et au second côté de manière arrondie.
